# FASCICULE DE BREVET EUROPEEN

(11) **EP 1 035 087 B1**
(45) Date de publication et mention de la délivrance du brevet: **23.07.2003**
(21) Numéro de dépôt: 00400591.4
(22) Date de dépôt: 06.03.2000
(51) Int. Cl.: C04B 28/04, C04B 40/06

(54) **Composition de revêtement de protection thermique de type ablatif**
Thermisch schützende Beschichtungszusammensetzung des ablativen Typs
Thermally protective coating composition of the ablative type

(43) Date de publication de la demande: 13.09.2000
(73) Titulaire: Etat Français représenté par le Délégué Général pour l' Armement, 00457 Armées (FR)
(72) Inventeur: Cambon, Christian, 83110 Sanary/Mer (FR)

(56) Documents cités:
- DE-A- 4 213 637
- DE-B- 1 182 128
- FR-A- 2 488 874
- GB-A- 970 334
- US-A- 4 086 200
- US-A- 4 500 674
- US-A- 4 595 714

## Description

La présente invention concerne une composition applicable sous forme d'enduit, notamment à la truelle, sur des zones soumises à des chocs thermiques.
Plus précisément, il s'agit d'une composition de revêtement destinée à la protection thermique et mécanique d'un support de toute forme, qu'il soit horizontal ou vertical, vis-à-vis de tirs de missiles ou de leurres et devant assurer, pour une longue durée, la conservation de l'intégrité du support, notamment une plate-forme ou un pont de navire de guerre et, le cas échéant, la protection du revêtement anti-corrosion du support.
Il est connu d'utiliser pour résister à des chocs thermiques des matériaux dits ablatifs, c'est-à-dire possédant une aptitude à perdre une certaine quantité de matière, donc d'épaisseur à chaque sollicitation thermique violente.
Etant donné l'application spécifique envisagée, les matériaux ablatifs peuvent être de deux types :
- les panneaux ou tuiles qui sont collés et jointoyés sur le support à protéger. Ils se composent le plus souvent d'une matrice organique de type phénolique,
- les revêtements sous forme d'enduits applicables par exemple à la truelle. Ils sont le plus fréquemment à base de résines de type époxydique (époxy/amine ou époxy/sulfure)ou de résines polyuréthannes ou encore de résines de type silicone.

Toutefois, les différentes solutions techniques actuellement proposées comportent des inconvénients.

Les tuiles à coller disponibles commercialement présentent un coût de matière très élevé et sont d'une mise en oeuvre complexe et très coûteuse, étant donné qu'elles impliquent un collage nécessitant l'utilisation d'adhésifs adéquats, une préparation de surface très exigeante et une technique de pose spécifique, notamment sur parois verticales .
En outre, leur tenue en service et leur comportement au vieillissement sont aléatoires.
Les tuiles risquent, en effet, de se décoller en service et
leur vieillissement, notamment en milieu marin agressif, est aléatoire.
De surcroît, leur intégration à bord peut s'avérer difficile, voire impossible, notamment en cas de supports de formes courbes.
Enfin, leur maintenance et leur réparation sont difficiles et coûteuses.

Les revêtements sous forme d'enduits applicables à la truelle, pour leur part, possèdent des caractéristiques mécaniques souvent inadaptées (flexibilité insuffisante) et certains de leurs éléments constitutifs sont toxiques (résines époxydiques de bas poids moléculaire, amines, isocyanates).
Ils sont surtout difficiles à mettre en oeuvre.
Leur mélangeage est délicat, leur application est complexe et problématique, notamment sur des parois verticales avec de fréquents risques de coulures en fortes épaisseurs. De plus, ils présentent une difficulté de ragréage, de surfaçage (surfaces irrégulières) et une durée pratique d'utilisation du mélange souvent très brève à des températures ambiantes supérieures à 25°C ou 30°C ;ils ont une durée de stabilité au stockage trop faible ; ils durcissent très lentement en dessous de 10°C et imposent une préparation parfaite du support à protéger. Il est nécessaire d'utiliser des solvants agressifs pour le nettoyage du matériel de mise en oeuvre.

Enfin, leur coût de matière est souvent rédhibitoire.
Des compositions de revêtement applicables notamment à la truelle sont décrites dans le brevet américain 4 595 714.
Ces compositions ablatives sont à base, d'une part, d'un constituant A liquide renfermant une résine de polysulfure et une amine en tant qu'agent de réticulation et comportant de courtes fibres de matériaux réfractaires et, d'autre part, d'un constituant B liquide à base d'une résine époxydique et d'un mélange de matériaux minéraux finement divisés.
Ces compositions de revêtement présentent l'inconvénient de contenir des produits toxiques et d'être très difficiles à mettre en oeuvre.

Un des buts de la présente invention est de proposer un revêtement de protection thermique efficace, peu coûteux, très facile d'emploi même par du personnel peu qualifié.
Un autre but est de disposer d'une composition de revêtement exempte de produits inflammables ou toxiques afin de pouvoir la stocker même à bord de navires de guerre et de réduire ainsi les contraintes de transport et de sécurité de stockage.
Un autre but est de disposer d'un revêtement de protection thermique d'approvisionnement et de maintenance faciles.

Pour ce faire, la présente invention a pour objet une composition de revêtement de protection thermique du type ablatif comportant deux constituants A et B présentés en conditionnements séparés et destinés à être mélangés avant mise en oeuvre de façon classique, par simple malaxage mécanique à température ambiante, caractérisée en ce que ces deux constituants contiennent les éléments suivants :
**constituant A sous forme liquide:**
   - de 20 à 95% massique d'un polymère halogéné sous forme d'une émulsion aqueuse (I),
   - de 5 à 80% massique d'un polymère du type silicone sous forme d'une émulsion aqueuse (II),
   - de 0 à 5% massique de microfibres organiques ou minérales
**constituant B sous forme solide :**
   - de 30 à 90% massique d'un liant hydraulique en poudre à haute résistance de type classique,
   - de 0 à 30% massique de fibres de verre ou de fils de verre coupés disponibles commercialement,
   - de 0,5 à 15% massique de microsphères creuses de céramique ou de verre disponibles commercialement,
   - de 0,1 à 20% massique d'oxyde de zinc sous forme pulvérulente,
   le ratio entre A et B étant de 1 partie en masse de A pour 0,5 à 2 parties en masse de B.

Selon un mode de réalisation, le polymère (I) est un copolymère du type chlorure de vinylidène-acrylique.
Préférentiellement, le polymère (I) est une dispersion aqueuse d'un polymère de chlorure de vinylidène/acrylique de pH inférieur ou égal à 3.
Selon une variante de réalisation, le constituant A contient 5% massique de fibres connues sous la dénomination commerciale de Kevlar®.
Le constituant B comprend des fils de verre coupés de 3 à 10mm et les microsphères creuses sont en verre.
Le constituant A peut contenir, en outre, un troisième polymère (III) compatible avec les polymères (I) et (II) sous forme d'une émulsion aqueuse.
Selon une variante de réalisation, le polymère (III) est un copolymère d'acétate de vinyle/acrylate.

Dans un autre mode de réalisation, le polymère (III), est une émulsion aqueuse de résine phénolique.
Une composition préférée, selon l'invention contient les éléments suivants :
**constituant A :**
   - de 80 à 90% massique d'un copolymère de chlorure de vinylidène-acrylique sous forme d'une émulsion aqueuse (I) de pH égal à 2,
   - de 5 à 15% massique d'une émulsion de silicone (II),
   - de 1 à 2% de fibres de Kevlar®
**constituant B :**
   - de 70 à 85% massique d'un liant hydraulique du commerce,
   - de 5 à 10% massique de microsphères creuses de verre,
   - de 1 à 10% massique d'oxyde de zinc sous forme pulvérulente,
le ratio entre A et B étant de 1 partie en masse de A pour 0,8 à 1,2 parties de B.
Le constituant B peut, en outre, contenir les éléments suivants :
- de 5 à 15% massique de fils de verre coupés,
- de 5 à 6% massique d'oxyde de fer noir synthétique,
- de 1 à 2% massique d'oxyde de titane,
- de 1 à 3% massique de borate de zinc.

La composition de revêtement selon l'invention est à base d'une matrice mixte organo-minérale, de type hydro-diluable.
Elle est présentée en deux conditionnements séparés contenant respectivement un constituant A et un constituant B.

Le constituant A se présente sous forme liquide et est composé essentiellement d'un mélange d'au moins deux polymères (I) et (II) sous forme d'émulsion aqueuse .

Le polymère (I) est à base de polymères halogénés, de préférence du type copolymère vinylidène-acrylique, par exemple une résine commercialisée par la Société ZENECA, sous la dénomination HALOFLEX 202 ou 202S.
Il s'agit d'une dispersion d'un copolymère de chlorure de vinylidène/acrylate, à 60% d'extrait sec dont une particularité est son pH acide inférieur ou égal à 3.
Le polymère (II) est de type silicone, par exemple une émulsion aqueuse de résine silicone commercialisée par la Société WACKER sous l'appellation SILRES M50E, à 50% d'extrait sec.
Selon une variante de réalisation, le constituant A comprend en outre jusqu'à 5% de microfibres organiques ou minérales.
Les fibres organiques sont, par exemple, des fibres de Kevlar®, notamment les fibres commercialisées par la Société DUPONT DE NEMOURS sous la dénomination KEVLAR PULP TXP.
Le rôle de ces microfibres est, d'une part, d'apporter un caractère thixotropique à la composition de revêtement facilitant sa mise en oeuvre et, d'autre part, de contribuer à améliorer les propriétés mécaniques et la cohésion de la matrice.
Selon un mode de réalisation, on peut ajouter un troisième polymère(III), sous forme d'émulsion aqueuse, pour obtenir des propriétés spécifiques, ce troisième polymère devant être compatible avec les deux précédents. Si l'on désire une flexibilité accrue, ce polymère pourra être, par exemple, un copolymère d'acétate de vinyle/acrylate. Si l'on désire une résistance thermique complémentaire, ce polymère pourra être une émulsion aqueuse de résine phénolique.

Le constituant B est présenté sous la forme d'un mélange de matières solides parmi lesquelles l'élément principal est un liant hydraulique en poudre, à haute résistance chimique, qui représente de 30% à 90% de la masse totale, et, de préférence 75%.
Le liant hydraulique est préférentiellement d'un grade adapté à un environnement agressif tel que l'environnement marin. Il s'agit, par exemple, du liant de grade CPA CEMI 52.5 type HRC commercialisé par la Société CALCIA.
En outre, le constituant B comprend de 0,5 à 15% massique de microsphères creuses de céramique ou, de préférence, de verre, de densité comprise entre 0,2 et 0,5. Ce sont, par exemple, les microsphères commercialisées par la Société 3M sous la dénomination B38/4000.
Ces microsphères ont pour rôle, d'une part, de réduire la masse volumique de la composition de revêtement, et, d'autre part, de contribuer aux propriétés d'isolation thermique.
Le constituant B contient de 0,1 à 20% massique d'oxyde de zinc sous forme de pigment pulvérulent, par exemple d'un grade classique utilisé dans la composition de peintures, tel que l'oxyde de zinc non aciculaire.
En outre, le constituant B contient de 0 à 30% massique de fibres de verre ou, de préférence, de fils de verre coupés de longueur comprise entre 3 et 10mm et, de préférence, entre 4 et 8mm. Selon une variante, on ajoute jusqu'à 3% de fibres connues sous la dénomination commerciale de Kevlar® ou de fibres de céramique dans le but d'améliorer les caractéristiques mécaniques (résistance à l'abrasion, cohésion interne, résistance à la fissuration) et les caractéristiques de mise en oeuvre, notamment lors d'agressions thermiques.
Eventuellement, pour certaines applications, on peut ajouter jusqu'à 10% massique de charges ignifugeantes, par exemple, des compositions pigmentaires à base de borate de zinc, notamment le produit commercialisé par la Société BORAX sous la dénomination FIREBRAKE ZB.
On peut aussi ajouter jusqu'à 20% massique de pigments colorants minéraux ou organiques, par exemple, de l'oxyde de titane rutile ou des oxydes de fer.
Enfin, on peut encore ajouter des charges minérales lamellaires pour contribuer à la cohésion interne et procurer un effet de barrière vis-à-vis des agents extérieurs, par exemple, le produit commercialisé par la Société NAINTSCH sous la dénomination PLASTORIT 025.
Le ratio entre le constituant A et le constituant B est de 1 partie en masse de A pour 0,3 à 2 parties en masse de B.

D'autres avantages et caractéristiques de l'invention apparaîtront dans la description d'exemples de réalisation ci-après.

### EXEMPLE 1

**Constituant A :**
   - 88,6% en masse de dispersion vinylidène/acrylique à 60% d'extrait sec, pH égal à 2
   - 10% en masse d'une émulsion de silicone à 60% d'extrait sec
   - 1,40% en masse de fibres de Kevlar ®
**Constituant B :**
   - 73,5% en masse de liant hydraulique de grade CPA-CEMI 52,5 PMESCP2 type HRC*
   - 8,75% en masse de microsphères creuses de verre
   - 4,50% en masse d'oxyde de fer noir synthétique
   - 1,50% en masse de TiO₂
   - 0,5% en masse de ZnO
   - 9,0% en masse de fils de verre coupés de 6mm de longueur
   - 2,25% en masse de borate de zinc
*Ce liant hydraulique commercialisé par la Société CALCIA est conforme aux normes françaises :
NFP 15301
NFP 15318
XPP 15319

Une composition typique de liant selon l'exemple 1 contient les éléments suivants :

| | |
|---|---|
| SiO₂ | 21% en masse |
| CaO | 65% en masse |
| Al₂O₃ | 4% en masse |
| Fe₂O₃ | 4% en masse |
| MgO | 1,5% en masse |
| SO₃ | 2% en masse |

Le ratio entre A et B est de 1 partie en masse de A pour 1,25 parties en masse de B.

### EXEMPLES 2 à 4 :

### Constituant A :

Il contient les éléments dont les pourcentages massiques figurent dans le tableau ci-dessous :

| | 2 | 3 | 4 |
|---|---|---|---|
| Emulsion vinylidène-acrylique | 47,25 | 95,70 | 84,00 |
| Emulsion silicone | 50,00 | 3,20 | 14,50 |
| Emulsion phénolique | 2,00 | 0 | 0 |
| Kevlar PULP TXP | 0 | 1,10 | 1,50 |
| Microfibres de Kevlar | 0,75 | 0 | 0 |

### Constituant B :

Il contient les éléments dont les pourcentages massiques figurent dans le tableau ci-dessous :

| | | | |
|---|---|---|---|
| Liant hydraulique NF | 80,00 | 80,00 | 73,00 |
| Microsphères creuses de céramique | 4,00 | 0 | 2,00 |
| Microsphères creuses de verre | 3,00 | 1,00 | 5,00 |
| PLASTORIT de grade 025 (Sté NAINTSCH) | 7,00 | 0 | 0 |
| Oxyde de zinc non aciculaire | 2,00 | 12,00 | 1,00 |
| Oxyde de titane rutile | 0 | 0 | 1,00 |
| Fils de verre coupés (4,5mm) | 4,00 | 4,00 | 0 |
| Fils de verre coupés (6mm) | 0 | 0 | 10,00 |
| Borate de zinc | 0 | 1,50 | 2,50 |
| Oxyde de fer noir synthétique | 0 | 1,50 | 5,50 |
| Total | 100,0 | 100,0 | 100,0 |
| | Ratio | Ratio | Ratio |
| | A+B | A+B | A+B |
| | A=100 | A=100 | A=100 |
| | B=150 | B=70 | B=130 |

Les courbes fournies à titre d'exemples correspondent aux enregistrements graphiques de la température en fonction du temps effectués, d'une part, au niveau de la surface extérieure du matériau exposé au flux thermique intense (température avant) et, d'autre part part, sous le matériau, c'est-à-dire au niveau de l'interface entre le matériau et son support métallique.
Les essais sur des éprouvettes métalliques revêtues d'enduits ablatifs de différentes origines ont été réalisés à l'aide du générateur thermique du four solaire du Centre d'essais d'Odeillo dépendant de la Direction des Centres d'expertise et d'essais de la Délégation Générale pour l'Armement et situé dans les Pyrénées Orientales.
Les figures 1 et 2 correspondent à un revêtement ablatif sous forme de tuiles.

Les figures 3 et 4 correspondent à un revêtement ablatif commercial applicable à la truelle.
Les figures 5 et 6 correspondent à un enduit ablatif selon l'invention.
Ces enduits ont été appliqués à l'épaisseur de 1 cm sur une éprouvette métallique en aluminium.
Les configurations de l'essai sont les suivantes :
Puissance thermique : 500W/cm2
Durée du flux thermique: 1200millisecondes
On observe que l'élévation de température en face arrière ( à l'interface entre le support et le matériau) est nettement plus faible dans le cas du revêtement selon l'invention (figures 5 et 6) que dans le cas des autres revêtements (figures 1 à 4).

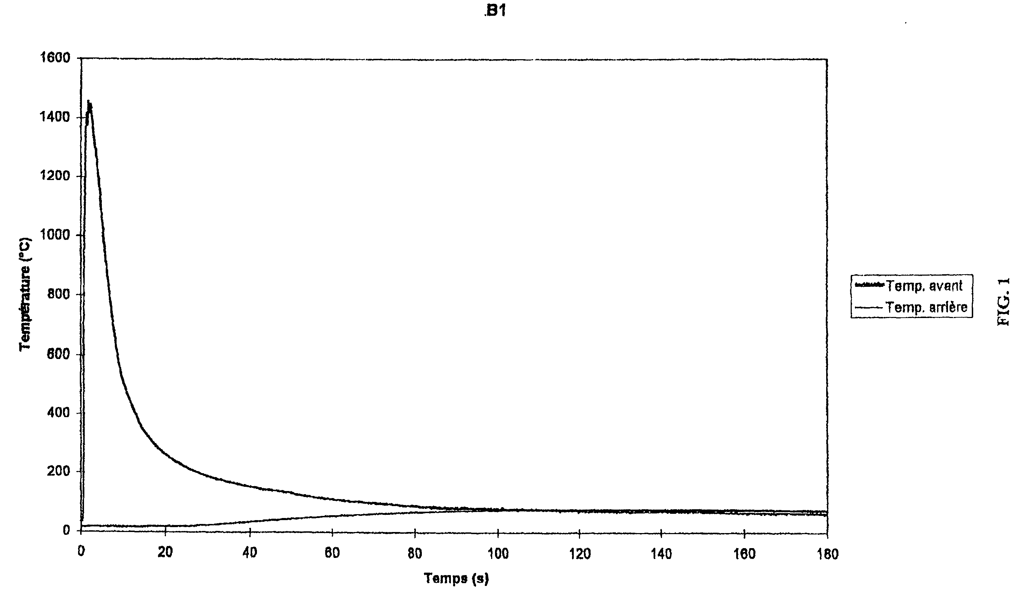

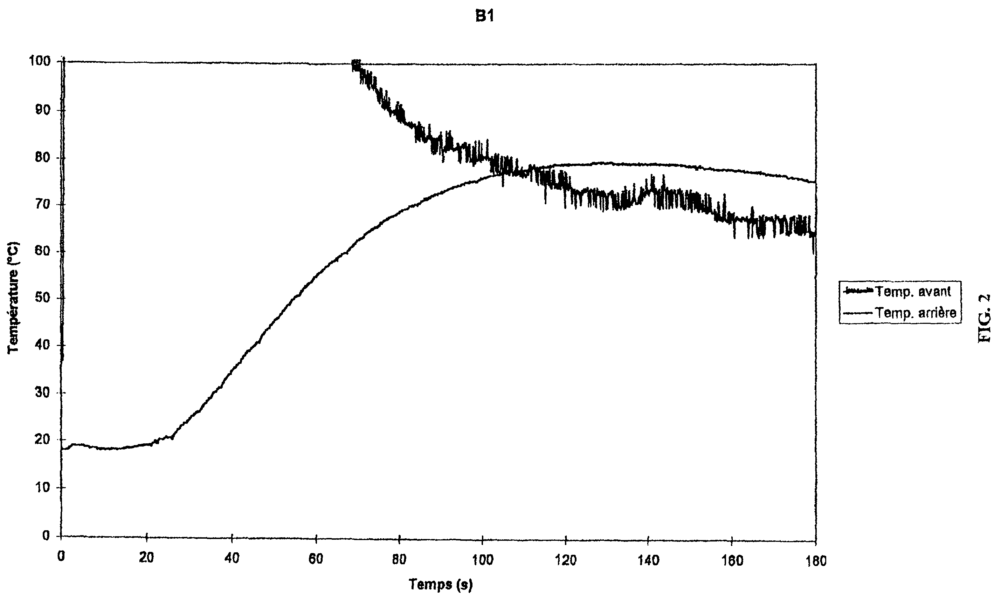

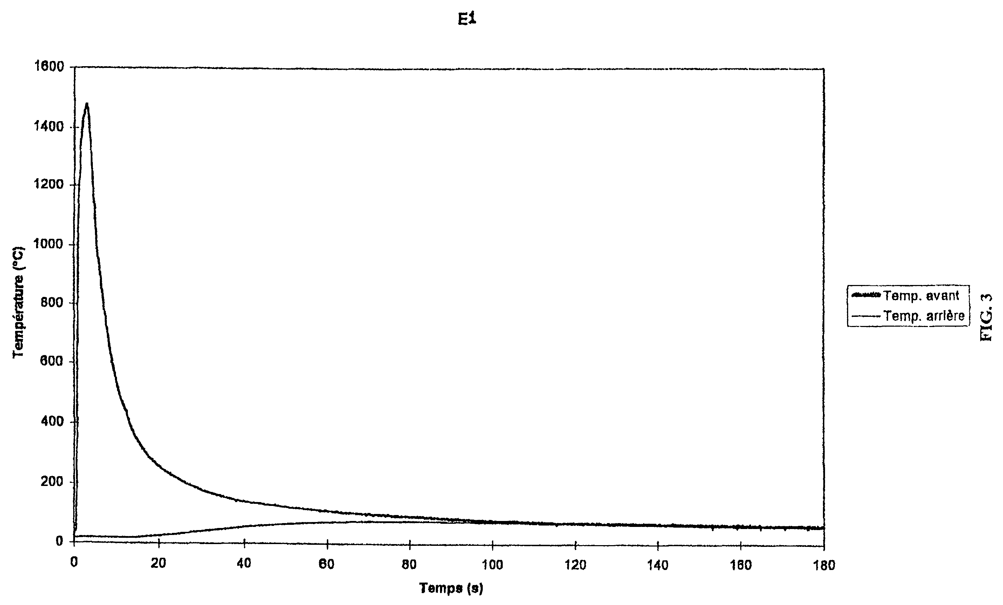

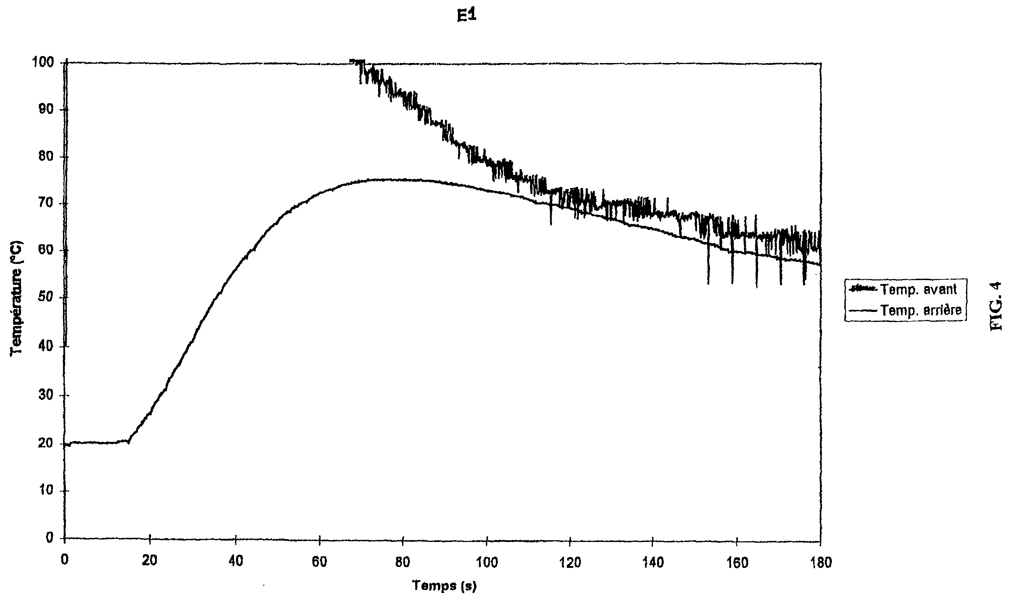

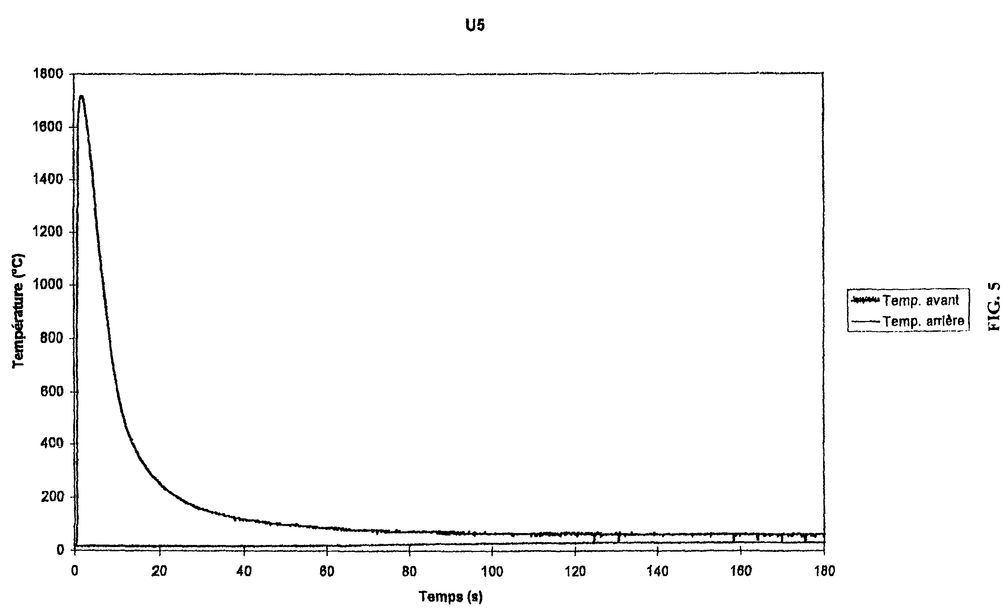

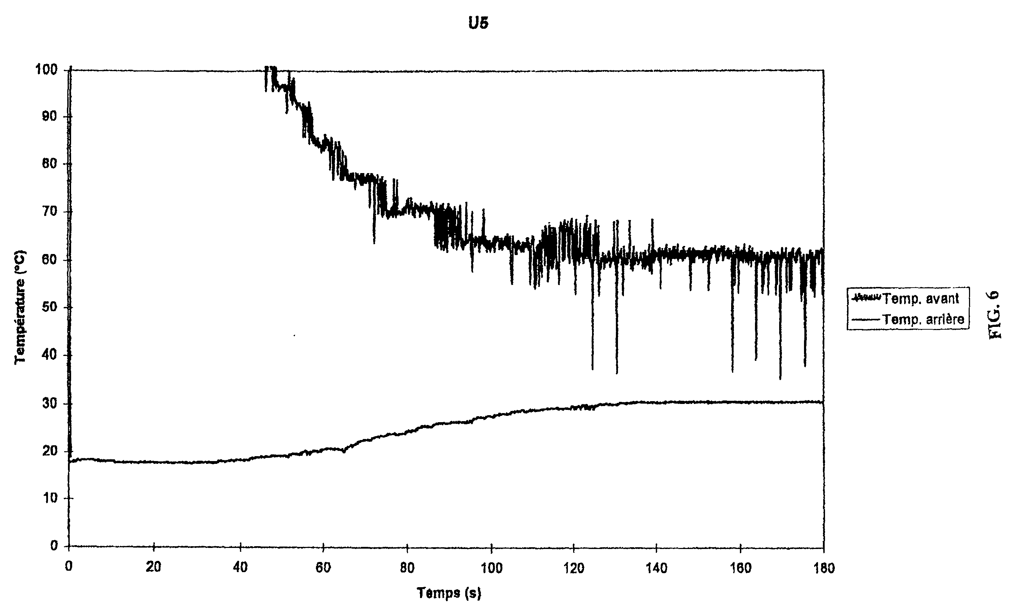

Les figures 2, 4 et 6 correspondent à un agrandissement des figures 1, 3 et 5.
Les courbes repérées B₁ correspondent à une tuile collée, à matrice phénolique, du commerce.
Les courbes repérées E₁ correspondent à un enduit applicable à la truelle, à matrice époxydique, du commerce.

La composition de revêtement selon l'invention présente l'avantage de ne renfermer aucun composant considéré comme toxique ou inflammable. Elle est notamment exempte de solvants organiques, d'amines, de dérivés époxydiques, de glycidyléthers ou d'isocyanates.
Lors de la mise en oeuvre, le constituant B solide pulvérulent est incorporé au constituant A liquide par simple malaxage mécanique à température ambiante pour former un enduit dont la viscosité et les caractéristiques thixotropiques ajustables permettent l'application en couches épaisses, c'est-à-dire jusqu'à 10 à 20mm aussi bien sur des parois verticales qu'horizontales, selon les besoins.

Un autre avantage de la composition selon l'invention est sa facilité de mise en oeuvre, à la truelle ou à la spatule, par du personnel peu qualifié.
La durée pratique d'utilisation typique de l'enduit, après mélange de A et B est de l'ordre d'une heure à 20°C.
Le matériel d'application peut être nettoyé simplement à l'eau.
La viscosité et les caractéristiques techniques de l'enduit peuvent être modulés selon la demande, soit par adaptation dans des fourchettes assez larges des proportions de A et de B, soit par ajustement des formulations respectives de A et de B.

Le mécanisme de formation du feuil sec de l'enduit est vraisemblablement très complexe et résulte essentiellement de la simultanéité de 3 types d'interactions :
- l'action de l'eau contenue dans les dispersions aqueuses de polymères sur le liant hydraulique (réaction analogue à celle de la prise d'un ciment),
- la réaction entre l'acidité de l'émulsion aqueuse du polymère halogéné avec les éléments basiques pulvérulents contenus dans le constituant B (liant hydraulique, oxyde de zinc par exemple)
- la réaction de coalescence des polymères en émulsion aqueuse contenus dans le constituant A insérés dans la matrice minérale (liant hydraulique), le composé mixte durci ainsi obtenu après séchage pouvant être qualifié de revêtement à « matrice organo-minérale ».
Le résultat de ces mécanismes conduit après séchage complet, à la formation d'un revêtement dur présentant les caractéristiques souhaitées, notamment protection thermique, caractéristiques mécaniques ( dureté, résistance aux chocs et à l'abrasion, flexibilité, cohésion), caractéristiques physico-chimiques (isolation thermique, ininflammabilité, imperméabilité à l'eau et aux agents contaminants).
Le caractère ablatif du revêtement , c'est-à-dire, son aptitude à perdre une certaine quantité de matière, donc d'épaisseur, après chaque sollicitation thermique violente (par exemple, tir de missile ou de leurre) peut être également modulable en faisant varier les proportions des constituants de la formulation.
Lors d'une sollicitation thermique violente de la surface du revêtement, l'un des mécanismes probables d'ablation provient d'une part de la déshydrochloruration thermique du polymère halogéné dont l'acide chlorhydrique gazeux dégagé est capté, d'une part, par l'oxyde de zinc pour former du chlorure de zinc et, d'autre part, de façon majoritaire est capté par la matrice minérale du liant hydraulique riche en hydroxyde de calcium pour former notamment du chlorure de calcium.
Sous l'action de la forte chaleur, la matrice organique se carbonise partiellement, tandis que le chlorure de zinc et le chlorure de calcium formés se volatilisent.
Au-delà d'une certaine température, il peut se produire également une sublimation de l'oxyde de zinc résiduel.
La combinaison de ces diverses réactions chimiques de décomposition, d'évaporation ou de sublimation permet d'absorber une grande partie de l'énergie thermique incidente.
En outre,sous l'action de la forte élévation de température, la partie la plus superficielle du polymère siliconé peut être partiellement décomposée tandis qu'une autre partie subit une réaction de réticulation qui contribue à maintenir l'intégrité mécanique du revêtement sous la pellicule carbonisée.

A titre d'exemple, l'ordre de grandeur de l'effet ablatif obtenu sur un revêtement de 10mm d'épaisseur peut varier de 0,5 à 2mm selon la formulation considérée pour une séquence de 1 à 3 tirs.
Après un certain nombre de dégradations thermiques ablatives, le revêtement est très facilement réparable par simple ragréage, après préparation adéquate des zones dégradées par brossage et rinçage.

## Revendications

1. Composition de revêtement de protection thermique du type ablatif comportant deux constituants A et B présentés en conditionnements séparés et destinés à être mélangés avant mise en oeuvre de façon classique, par simple malaxage mécanique à température ambiante, **caractérisée en ce que** ces deux constituants contiennent les éléments suivants :
**constituant A sous forme liquide:**
- de 20 à 95% massique d'un polymère halogéné sous forme d'une émulsion aqueuse (I),
- de 5 à 80% massique d'un polymère du type silicone sous forme d'une émulsion aqueuse (II),
- de 0 à 5% massique de microfibres organiques ou minérales
**constituant B sous forme solide :**
- de 30 à 90% massique d'un liant hydraulique en poudre à haute résistance de type classique,
- de 0 à 30% massique de fibres de verre ou de fils de verre coupés disponibles commercialement,
- de 0,5 à 15% massique de microsphères creuses de céramique ou de verre disponibles commercialement,
- de 0,1 à 20% massique d'oxyde de zinc sous forme pulvérulente,
- le ratio entre A et B étant de 1 partie en masse de A pour 0,5 à 2 parties en masse de B.

2. Composition selon la revendication 1 **caractérisée en ce que** le constituant A comprend un polymère (I) qui est un copolymère du type chlorure de vinylidène-acrylique.

3. Composition selon la revendication 2, **caractérisée en ce que** le polymère (I) est une dispersion aqueuse d'un polymère de chlorure de vinylidène/acrylique de pH inférieur ou égal à 3.

4. Composition selon la revendication 1, **caractérisée en ce que** le constituant A contient 5% massique de fibres de Kevlar®.

5. Composition selon la revendication 1, caractérisée en ce le constituant B comprend des fils de verre coupés de 3 à 10mm de diamètre et en ce que les microsphères creuses sont en verre.

6. Composition selon la revendication 1, **caractérisée en ce que** le constituant A contient, en outre, un troisième polymère (III) compatible avec les polymères (I) et (II) sous forme d'une émulsion aqueuse.

7. Composition selon la revendication 6, caractérisée en ce le polymère (III) est un copolymère d'acétate de vinyle/acrylate.

8. Composition selon la revendication 7, **caractérisée en ce que** le polymère (III) est une émulsion aqueuse de résine phénolique.

9. Composition selon la revendication 1 **caractérisée en ce que** les constituants A et B contiennent les éléments suivants :
**constituant A :**
- de 80 à 90% massique d'un copolymère de chlorure de vinylidène-acrylique sous forme d'une émulsion aqueuse (I) de pH égal à 2,
- de 5 à 15% massique d'une émulsion de silicone (II),
- de 1 à 2% de fibres de Kevlar
**constituant B :**
- de 70 à 85% massique d'un liant hydraulique du commerce,
- de 5 à 10% massique de microsphères creuses de verre,
- de 1 à 10% massique d'oxyde de zinc sous forme pulvérulente,
le ratio entre A et B étant d'1 partie en masse de A pour 0,8 à 1,2 parties de B.

10. Composition selon la revendication 9, **caractérisée en ce que** le constituant B contient, en outre, les éléments suivants :
- de 5 à 15% massique de fils de verre coupés,
- de 5 à 6% massique d'oxyde de fer noir synthétique,
- de 1 à 2% massique d'oxyde de titane,
- de 1 à 3% massique de borate de zinc.

## Patentansprüche

1. Zusammensetzung für einen wärmeabsorbierenden Wärmeschutzüberzug, welche zwei getrennt verpackte Komponenten A und B umfaßt, die vor dem Gebrauch auf herkömmliche Weise durch einfaches mechanisches Mischen bei Raumtemperatur zu vermischen sind, **dadurch gekennzeichnet, daß** die zwei Komponenten die folgenden Bestandteile enthalten:
Komponente A in flüssiger Form:
- 20 bis 95 Masse-% eines halogenierten Polymers in Form einer wässrigen Emulsion (I),
- 5 bis 80 Masse-% eines Silikon-Polymers in Form einer wässrigen Emulsion (II),
- 0 bis 5 Masse-% organischer oder mineralischer Mikrofasern
Komponente B in fester Form:
- 30 bis 90 Masse-% eines pulverförmigen hydraulischen Bindemittels hoher Festigkeit und herkömmlicher Art,
- 0 bis 30 Masse-% Glasfasern oder im Handel erhältlicher geschnittener Glasfäden,
- 0,5 bis 15 Masse-% von im Handel erhältlichen Mikrohohlkügelchen aus Keramik oder Glas,
- 0,1 bis 20 Masse-% Zinkoxid in Pulverform,
wobei das Verhältnis zwischen A und B 1 Masseteil A auf 0,5 bis 2 Masseteile B beträgt.

2. Zusammensetzung nach Anspruch 1, **dadurch gekennzeichnet, daß** die Komponente A ein Polymer (I) umfaßt, das ein Vinylidenchlorid-Acryl-Copolymer ist.

3. Zusammensetzung nach Anspruch 2, **dadurch gekennzeichnet, daß** das Polymer (I) eine wässrige Dispersion aus einem Vinylidenchlorid-Acryl-Polymer mit einem pH kleiner oder gleich 3 ist.

4. Zusammensetzung nach Anspruch 1, **dadurch gekennzeichnet, daß** die Komponente A 5 Masse-% Kevlar® Fasern enthält.

5. Zusammensetzung nach Anspruch 1, **dadurch gekennzeichnet, daß** die Komponente B geschnittene Glasfäden mit einem Durchmesser von 3 bis 10 mm umfasst, und dadurch, daß die Mikrohohlkügelchen aus Glas bestehen.

6. Zusammensetzung nach Anspruch 1, **dadurch gekennzeichnet, daß** die Komponente A zusätzlich ein drittes Polymer (III) in Form einer wässrigen Emulsion enthält, das mit den Polymeren (I) und (II) kompatibel ist.

7. Zusammensetzung nach Anspruch 6, **dadurch gekennzeichnet, daß** das Polymer (III) ein Vinylacetat-Acrylat-Copolymer ist.

8. Zusammensetzung nach Anspruch 7, **dadurch gekennzeichnet, daß** das Polymer (III) eine wässrige Emulsion eines Phenolharzes ist.

9. Zusammensetzung nach Anspruch 1, **dadurch gekennzeichnet, daß** die Komponenten A und B die folgenden Bestandteile enthalten:
Komponente A:
- 80 bis 90 Masse-% eines Vinylidenchlorid-Acryl-Copolymers in Form einer wässrigen Emulsion (I) mit einem pH von 2,
- 5 bis 15 Masse-% einer Silikonemulsion (II),
- 1 bis 2 % Kevlar-Fasern
Komponente B:
- 70 bis 85 Masse-% eines handelsüblichen hydraulischen Bindemittels,
- 5 bis 10 Masse-% Mikrohohlkügelchen aus Glas,
- 1 bis 10 Masse-% Zinkoxid in Pulverform,
wobei das Verhältnis zwischen A und B 1 Masseteil A auf 0,8 bis 1,2 Teile B beträgt.

10. Zusammensetzung nach Anspruch 9, **dadurch gekennzeichnet, daß** die Komponente B zusätzlich die folgenden Bestandteile enthält:
- 5 bis 15 Masse-% geschnittene Glasfäden,
- 5 bis 6 Masse-% synthetisches schwarzes Eisenoxid,
- 1 bis 2 Masse-% Titanoxid,
- 1 bis 3 Masse-% Zinkborat.

## Claims

1. Thermal protection coating composition of the ablative type comprising two constituents A and B provided in separate packs and intended to be mixed before use in a conventional manner, by simply mechanically mixing them at ambient temperature, **characterized in that** these two constituents contain the following components :
**Constituent A in liquid form :**
- from 20 to 95 % by mass of a halogenated polymer in the form of an aqueous emulsion (I),
- from 5 to 80 % by mass of a silicone type polymer in the form of an aqueous emulsion (II),
- from 0 to 5 % by mass of organic or inorganic microfibres.
**Constituent B in solid form :**
- from 30 to 90 % by mass of a conventional type of high strength powdered hydraulic binder,
- from 0 to 30 % by mass of commercially available glass fibres or chopped glass yarn,
- from 0.5 to 15 % by mass of commercially available ceramic or glass hollow microspheres,
- from 0.1 to 20 % by mass of zinc oxide in powder form,
- the ratio between A and B being 1 part by mass of A for 0.5 to 2 parts by mass of B.

2. Composition according to claim 1, **characterized in that** the constituent A comprises a polymer (I) that is a copolymer of the vinylidene-acrylic chloride type.

3. Composition according to claim 2, **characterized in that** the polymer (I) is an aqueous dispersion of a vinylidene/acrylic chloride polymer with a pH of less than or equal to 3.

4. Composition according to claim 1, **characterized in that** the constituent A contains 5 % by mass of Kevlar® fibres.

5. Composition according to claim 1, **characterized in that** the constituent B comprises chopped glass yarns 3 to 10 mm in diameter and **in that** the hollow microspheres are made of glass.

6. Composition according to claim 1, **characterized in that** the constituent A additionally contains a third polymer (III) compatible with the polymers (I) and (II) in the form of an aqueous emulsion.

7. Composition according to claim 6, **characterized in that** the polymer (III) is a vinyl acetate/acrylate copolymer.

8. Composition according to claim 7, **characterized in that** the polymer (III) is an aqueous emulsion of a phenolic resin.

9. Composition according to claim 1, **characterized in that** the constituents A and B contain the following components:
**Constituent A :**
- from 80 to 90 % by mass of a vinylidene-acrylic chloride copolymer in the form of an aqueous emulsion (I) with a pH equal to 2,
- from 5 to 15 % by mass of a silicone emulsion (II),
- from 1 to 2 % of Kevlar fibres.
**Constituent B :**
- from 70 to 85 % by mass of a commercial hydraulic binder,
- from 5 to 10 % by mass of hollow glass microspheres,
- from 1 to 10 % by mass of zinc oxide in powder form,
the ratio between A and B being one part by mass of A for 0.8 to 1.2 parts of B.

10. Composition according to claim 9, **characterized in that** the constituent B additionally contains the following components :
- from 5 to 15 % by mass of chopped glass yarn,
- from 5 to 6 % by mass of synthetic black iron oxide,
- from 1 to 2 % by mass of titanium oxide,
- from 1 to 3 % by mass of zinc borate.
